# EUROPÄISCHE PATENTSCHRIFT

(11) **EP 3 460 696 B1**
(45) Veröffentlichungstag und Bekanntmachung des Hinweises auf die Patenterteilung: **11.11.2026**
(21) Anmeldenummer: 18195079.1
(22) Anmeldetag: 18.09.2018
(51) Int. Cl.: G06F 21/31, G06F 21/44, G06F 21/64, G08G 5/00, G08G 1/017

(54) **DYNAMISCHE KENNZEICHNUNG EINES FAHRZEUGS UND PRÜFUNG**
DYNAMIC MARKING OF A VEHICLE AND TESTING
IDENTIFICATION DYNAMIQUE D'UN VÉHICULE ET ESSAI

(30) Priorität: 26.09.2017 DE 102017122221
(43) Veröffentlichungstag der Anmeldung: 27.03.2019
(73) Patentinhaber: Bundesdruckerei GmbH, 10969 Berlin (DE)
(72) Erfinder: Orlow, Stephan von, 13507 Berlin (DE)
(74) Vertreter: Richardt Patentanwälte PartG mbB

(56) Entgegenhaltungen:
- CA-A1- 3 016 670
- CN-A- 106 209 923
- US-A1- 2015 052 352
- US-A1- 2016 280 371
- US-A1- 2017 124 356
- AL-SHAREEDA SARAH ET AL: "Preserving location privacy using an anonymous authentication dynamic mixing crowd", 2016 IEEE 19TH INTERNATIONAL CONFERENCE ON INTELLIGENT TRANSPORTATION SYSTEMS (ITSC), IEEE, 1 November 2016 (2016-11-01), pages 545 - 550, XP033028396, DOI: 10.1109/ITSC.2016.7795607
- DOLEV SHLOMI ET AL: "Dynamic Attribute Based Vehicle Authentication", 2014 IEEE 13TH INTERNATIONAL SYMPOSIUM ON NETWORK COMPUTING AND APPLICATIONS, IEEE, 21 August 2014 (2014-08-21), pages 1 - 8, XP032662282, [retrieved on 20141014], DOI: 10.1109/NCA.2014.5

## Beschreibung

### Technisches Gebiet

Die vorliegende Erfindung betrifft das Gebiet der Fahrzeugerkennung, insbesondere eine PKI basierte Fahrzeugerkennung.

Mit Blick auf die Zunahme des Verkehrs werden in wachsendem Umfang Maßnahmen erforderlich, die die Sicherheit der Verkehrsteilnehmer sowie des Umfeldes automatisiert unterstützen.

Ein Beispiel ist das sogenannte autonome Fahren von Fahrzeugen im Straßenverkehr, wobei das Fahrzeug, oder eine Fahrzeugkomponente darin, hilft, das Ziel zu erreichen, das Fahrzeug in der Spur zu halten und keine anderen Verkehrsteilnehmer zu gefährden.

Ein weiteres Beispiel ist der Einsatz von unbemannten Flugkörpern, auch UAV, unmanned aircraft vehicles genannt. UAV sind unbemannte, fliegende, im hier gemeinten Sinne alternativ auch schwimmende, tauchende oder fahrende Fahrzeuge, die sich autonom oder über eine Fernlenkungseinrichtung gesteuert bewegen. Sie definieren einen Trend, beispielsweise logistische Probleme neu lösen. Autonome UAVs stehen vor dem Durchbruch, neue Wege für vermessungstechnische, fotografische, logistische oder sportliche Herausforderungen zu definieren. Durch den Betrieb von UAVs entstehen gleichzeitig viele ungeklärte Fragen. Ist ein möglicherweise sehr dichter Betrieb von UAV in einer städtischen Umgebung steuerbar und vertretbar, wem gehört ein UAV und welchen Auftrag hat es, wie wird ein möglicher, autonomer Betrieb gewährleistet und verfolgt, um nur einige Frage zu nennen.

CA3016670A1 offenbart ein Beispiel eines Verfahrens zur Autorisation-basierten Flug-Compliance von UAVs.

Der Ausgangspunkt zur Lösung all dieser Fragen besteht in einer vertrauenswürdigen und zuverlässigen Identifizierung des UAVs während des Betriebs.

### Zusammenfassung

Die der Erfindung zugrundeliegende Aufgabe wird durch die Merkmale der unabhängigen Ansprüche gelöst. Die abhängigen Ansprüche beschreiben Ausführungsformen.

Gemäß einem ersten Aspekt betreffen Ausführungsformen ein Verfahren zur dynamischen Kennzeichnung eines Fahrzeugs. Das Verfahren ist computer-implementiert. Das kann den Vorteil haben, dass eine automatische, rasche und zuverlässige Abarbeitung der erforderlichen Schritte ermöglicht ist.

Das Verfahren umfasst ein Bereitstellen einer Identifikations-Codierung mit einer das Fahrzeug identifizierenden Information. Eine das Fahrzeug identifizierende Information kann beispielsweise eine umkehrbar eindeutige Kennung sein, die dem Fahrzeug zugeordnet ist. Es kann vorgesehen sein, dass die das Fahrzeug identifizierende Information in einem Register hinterlegt ist, so dass aus der das Fahrzeug identifizierenden Information auf das Fahrzeug geschlossen werden kann. Es wird erwogen, anstelle der das Fahrzeug identifizierenden Information eine Information zu verwenden, die eine Fahrzeugkomponente umkehrbar eindeutig kennzeichnet. In diesem Falle kann vorgesehen sein, dass das hier beschriebene Verfahren in der Fahrzeugkomponente ausgeführt wird.

Das Verfahren umfasst ein Bestimmen einer Ortsinformation, die einen Ort des Fahrzeugs bezeichnet. Das Bestimmen der Ortsinformation wird durch ein satellitengestütztes Positionsbestimmungssystem wie beispielsweise GPS, GLONASS, Galileo oder Beidou unterstützt. Zusätzlich wird eine Orts-Codierung mit der Ortsinformation bereitgestellt. Dies kann den Vorteil haben, dass die Ortsinformation elektronisch verarbeitet werden kann. Dem Fachmann wird klar sein, dass eine Codierung als eine Zeichenkette implementiert sein kann, wie beispielsweise eine Bitfolge oder eine Folge von Bytes oder Characters.

Ferner ist vorgesehen, die Identifikations-Codierung und die Orts-Codierung zu kombinieren, um eine Authentifizierungs-Codierung bereitzustellen. Die Kombination der Identifikations-Codierung und der Orts-Codierung kann als Konkatenation erfolgen. Es wird aber alternativ auch erwogen, beide Codierungen in einer XML-Struktur anzuordnen. Die sich daraus ergebende Authentifizierungs-Codierung kann somit eine Information über einen Aufenthaltsort eines eindeutig gekennzeichneten Fahrzeugs enthalten. Wie nachfolgend detaillierter dargelegt wird, kann hierdurch ein Vorteil bereitgestellt werden, dass somit bereits eine Kenntnis darüber gewonnen werden kann, ob das durch die Identifikations-Codierung identifizierte und/oder identifizierbare Fahrzeug sich an dem durch die die Orts-Codierung bezeichneten Ort oder Ortsabschnitt aufhalten darf.

Ferner ist vorgesehen, die Authentifizierungs-Codierung zu signieren, um eine Signatur-Codierung bereitzustellen. Das Signieren erfolgt elektronisch, so dass eine elektronische Signatur der Authentifizierungs-Codierung erhalten wird. Der Vorgang der Berechnung einer elektronischen Signatur ist an und für sich bekannt. Es gibt diverse Möglichkeiten der Berechnung.

Beispielsweise kann in Ausführungsformen die Signatur im Rahmenwerk einer sogenannten Public Key Infrastructure, PKI, berechnet werden, welche auf einer sogenannten asymmetrischen Kryptografie beruht. Kern der asymmetrischen Kryptografie sind Verfahren sowie ein Schlüsselpaar, das aus einem privaten Schlüssel des Verwenders und einem dem privaten Schlüssel zugeordneten öffentlichen Schlüssels des Verwenders besteht, sowie einer Konstruktion von Verfahren, privatem Schlüssel und öffentlichem Schlüssel der Art, dass es mit gegenwärtigen Computerressourcen nicht möglich ist, in überschaubarer Zeit, aus Verfahren und öffentlichem Schlüssel auf den privaten Schlüssel zu schließen. Möchte jemand von einer unbestimmten Mehrzahl von Dritten verschlüsselte Nachrichten erhalten, so veröffentlicht er seinen öffentlichen Schlüssel sowie das gewählte Verfahren - das meistens im öffentlichen Schlüssel schon explizit oder implizit angegeben ist. Eine Nachricht, die mit dem öffentlichen Schlüssel verschlüsselt wurde, kann nur mit dem zugeordneten privaten Schlüssel wieder entschlüsselt werden. Aus diesem Grunde ist es zweckmäßig, den privaten Schlüssel in einem hohen Maße zu schützen, so dass dieser nicht in fremde Hände fallen kann. Vorrichtungen, die zur Speicherung eines privaten Schlüssels vorgesehen sein können, können beispielsweise, aber nicht erschöpfend, ein Hochsicherheitsmodul, HSM, oder eine sichere Signaturerstellungseinheit, SSEE, sein.

In Kürze beschrieben wird von der zu unterzeichnenden Codierung ein nach aktuellem Stand sicherer Hash-Wert berechnet, ein Verfahren, das dem Grunde nach bekannt ist. Dieser Hash-Wert wird mit Ferner ist vorgesehen, dass die Ausgabe-Codierung ausgegeben wird. Zu diesem Zweck kann es vorgesehen sein, dass die Ausgabe-Codierung über eine dementsprechend modulierte Lichtabstrahl-Vorrichtung erfolgen kann. Eine Lichtabstrahl-Vorrichtung kann dazu hergerichtet sein, im sichtbaren oder infraroten Spektralbereich zu emittieren. Es wird erwogen, auf mehreren Frequenzen gleichzeitig verschiedene Informationsgehalte zu emittieren. Alternativ oder zusätzlich kann vorgesehen sein, eine Emission der Ausgabe-Codierung über entsprechend modulierte Funkwellen oder Schallwellen vorzunehmen.

Es ist vorgesehen, dass das Kombinieren von Codierungen durch eine Verkettung, eine Konkatenation oder eine sonstige Aggregation bereitgestellt wird. Auf diese Weise werden die zu prüfenden Informationen in einer Form derart organisiert oder gebündelt, dass eine einfache Übertragung erfolgen kann.

In Ausführungsformen kann die Ortsinformation auf der Grundlage eines gemessenen Ortes und einer Zuordnung des gemessenen Ortes - oder der gemessenen Ortskoordinaten - zu einem Raumgitter gebildet werden. Unter einem Raumgitter wird hier insbesondere eine Zuordnung von Orts-Koordinaten, wie beispielsweise GPS-Koordinaten, zu einem Raumvolumenelement, beispielsweise einem gedachten Kubus verstanden, wobei diese Zuordnung auf einer gleichmäßigen Anordnung dieser Kuben beruht. Andere räumliche Formen als Kuben können gleichwertig sein, beispielsweise können räumliche Formen mit sechseckiger Grundflache, wie oftmals zur Darstellung der Abdeckung eines GSM-Mobil-Telekommunikationsnetzes verwendet werden, zugrundegelegt werden. Damit kann es möglich sein, dass nicht die Ortskoordinaten signiert werden, sondern eine Kennung des Raumgitters. Auf diese Weise kann in der nachfolgenden Überprüfung eine besonders schnelle Verifikation vorgenommen, ob sich das Fahrzeug berechtigterweise oder unberechtigterweise in einem Raumvolumenelement befindet.

In Ausführungsformen kann eine Datenbank vorgesehen sein, die die - beispielsweise satellitengestützt - ermittelten Ortskoordinaten in eine Kennung eines Raumvolumenelements umzuwandeln hilft.

Es ist vorgesehen, dass der gemessene Ort durch eine oder mehrere Messungen auf der Grundlage eines oder mehrerer Satellitensignale, durch eine Abstandsmessung und/oder Triangulation mit bekannten Signalstrahlungsquellen, oder durch eine Kombination davon bestimmt wird. Unter einer Signalstrahlungsquelle wird im folgenden - nicht-abschließend - beispielsweise ein Satellit, ein Mobil-Telekommunikations-Funkmast, oder ein WLAN-Hotspot verstanden. Mittels der bekannten Positionen derartiger Strahlungsquellen unter Verwendung von Signallaufzeiten und/oder gemessenen Strahlungsintensitäten kann es möglich sein, eine präzise Messung oder Bestimmung des Ortes vorzunehmen.

In Ausführungsformen kann eine eine Zeitinformation repräsentierende Zeit-Codierung bereitgestellt werden, wobei die Authentifizierungs-Codierung durch Kombinieren der Identifikations-Codierung, der Orts-Codierung und der Zeit-Codierung gebildet wird. Mit anderen Worten kann es vorgesehen sein, dass die Authentifizierungs-Codierung nicht nur durch zwei Codierungen gebildet wird, sondern durch die drei Codierungen der Identifikations-Codierung, der Orts-Codierung und der Zeit-Codierung. Es kann ja sein, dass ein bestimmtes Fahrzeug sich zu einem bestimmten Zeitpunkt an einem bestimmten Ort aufhalten darf. Zu allen anderen Zeitpunkten aber nicht. Der Fachmann wird verstehen, dass mit Zeitpunkt hier auch ein Zeitintervall gemeint sein kann. Lediglich aus Gründen der besseren Lesbarkeit wird im Folgenden weiterhin der Begriff Zeitpunkt referenziert.

Beispielsweise kann in Ausführungsformen erwogen werden, dass eine logistische Transport- und oder Paket-Lieferdrohne sich in den Abend- und Nachtstunden nirgends in der Luft aufhalten darf. Es kann ferner in Ausführungsformen erwogen werden, dass eine logistische Drohne sich unter keinen Umstanden jemals in der Nähe von Verwaltungs- und/oder Regierungsgebäuden, Flughäfen oder sonstigen Raumbereichen von öffentlichem Interesse befinden darf. Es kann ferner in Ausführungsformen vorgesehen werden, dass Drohnen aus dem Hobby-Bereich in bebautem Gebiet sich nur in einem einzigen bestimmten Volumenabschnitt befinden darf.

In Ausführungsformen kann vorgesehen sein, dass die Zeitinformation durch die Satellitensignale und/oder sonstigen Signalstrahlungsquellen gebildet wird. Auf diese Weise kann eine besonders gut nachprüfbare und zuverlässige Zeitbasis gegeben sein, die unabhängig von einer möglicherweise ungenauen Uhr an Bord des Fahrzeugs ist.

In Ausführungsformen kann vorgesehen sein, dass die Zeitinformation durch eine interne Uhr im Fahrzeug gebildet wird. Dies kann vorteilhaft sein, wenn keine der aktuell zur Verfügung stehenden Signalquellen ein Uhrzeitsignal liefern, oder, wenn der Ort aufgrund einer Abwesenheit von funktionierenden Signalquellen nur geschätzt werden kann. In einem derartigen Fall kann es vorgesehen sein, dass die Authentifizierungs-Codierung zusätzlich eine Codierung umfasst, der entnehmbar ist, dass die Orts- und Zeitangaben nur geschätzt sind. Dies kann vorteilhaft sein, wenn eine bestimmte Ort-Zeit-Kombination zu bewerten ist.

Es ist vorgesehen, dass das Signieren mittels asymmetrischer Kryptografie vorgenommen wird.

Es ist vorgesehen, dass das Signieren mittels eines privaten Schlüssels vorgenommen wird.

Es ist vorgesehen, dass die Ausgabe-Codierung vor der Ausgabe mit einem Zertifikat einer Certification-Authority oder mit einem Verweis darauf kombiniert wird.

Es ist vorgesehen, dass das Zertifikat zumindest die von der Certification-Authority signierte Kombination von der Identifikations-Codierung mit dem öffentlichen Schlüssel des Fahrzeugs umfasst. Auf diese Weise kann in besonderem Maße sichergestellt sein, dass das Fahrzeug dasjenige ist, das es durch Ausgabe der Ausgabe-Codierung vorgibt zu sein. Mit anderen Worten: Die Ausgabe-Codierung ist sicher gegen eine Fälschung. Die Ausgabe-Codierung kann somit als fälschungssicheres Fahrzeug-Kennzeichen angesehen werden.

Da die Ausgabe-Codierung abhängig ist vom Ort und der Kennung des Fahrzeugs, kann ein möglicher Fälscher nicht einfach die Ausgabe-Kennung aufzeichnen und sie in einem eigenen Fahrzeug dann wiedergeben, denn die Ausgabe-Kennung ändert sich ja von Ort zu Ort.

Besonders fälschungssicher ist die Verwendung der Ausgabe-Kennung, die Kennung, Ort und Zeit enthält, da eine kopierte Kennung bereits im nächsten Augenblick wertlos ist.

In Ausführungsformen kann vorgesehen sein, dass das Zertifikat dessen Gültigkeitsdauer umfasst.

In Ausführungsformen kann vorgesehen sein, dass das Verfahren in einem bemannten Fahrzeug oder in einem unbemannten Fahrzeug ausgeführt wird. Im Falle eines unbemannten Fahrzeugs kann es sich um eine Flugdrohne, beispielsweise zu logistischen Zwecken, um ein Straßenfahrzeug, wie beispielsweise einen Transporter auf Langstrecken oder ein modernes elektrisch angetriebenes Auto handeln, oder um ein Schienenfahrzeug oder um ein Wasserfahrzeug handeln. Im Falle eines bemannten Fahrzeugs kann es sich um ein Flugvehikel, ein straßengebundenes Fahrzeug, ein gleisgebundenes Fahrzeug oder um ein Wasserfahrzeug handeln.

Ausführungsformen können vorteilhaft sein, da eine fälschungssichere Authentifizierung eines mobilen Fahrzeug gewährleistet sein kann, so dass es möglich sein kann, zu erkennen, ob das in Betracht gekommene Fahrzeug sich zu einer Zeit an einem Ort befindet, wo es sich zu dieser Zeit befinden darf.

In Ausführungsformen kann vorgesehen sein, dass das unbemannte Fahrzeug, in nicht abschließender Aufzählung, eine Drohne, ein Boot, ein straßengebundenes Auto, oder ein gleisgebundener Zug ist.

Es ist vorgesehen, dass das Ausgeben der Ausgabe-Codierung mittels eines optischen, akustischen oder elektromagnetischen Ausgabegeräts erfolgt. Die Ausgabe-Codierung kann beispielsweise mittels Modulation eines Trägers verbreitet werden. Es ist vorgesehen, sichtbares Lichts oder IR-Licht einzusetzen, alternativ kann ein akustisches Signal im hörbaren oder im Ultraschallbereich vorgesehen sein, alternativ kann ein Funksignal vorgesehen sein.

In einem Aspekt wird ein Verfahren computer-implementiertes zur Authentifikation eines Fahrzeugs bereitgestellt, wobei das Verfahren zur Authentifikation des Fahrzeugs auf dem voranstehend beschriebenen Verfahren basiert. Es ist vorgesehen, dass das Verfahren zur Authentifikation computer-implementiert ist.

Es ist vorgesehen, dass die ausgegebene Ausgabe-Codierung des Fahrzeugs erfasst wird. Dies geschieht mit einem entsprechenden Sensor, der auf die optischen, akustischen oder elektromagnetischen Signale des Fahrzeugs anspricht. Es kann vorgesehen sein, dass der Sensor das erfasste Signal in elektronischer Form an einen dafür vorgesehenen Rechner mit Prozessor, Speicher, Sensor-Anschluss, Ausgabe-Anschluss und verbindenden Bus weitergibt.

Es ist vorgesehen, dass die Identifikations-Codierung sowie die Orts- Codierung aus der erfassten Ausgabe-Codierung extrahiert werden. Mit "extrahiert werden" ist hier insbesondere gemeint, dass aus der Ausgabe-Codierung, die ja aus mehreren Codierungen kombiniert sein kann, eine Codierung derart aufbereitet wird, dass beispielsweise die Identifikations- Codierung von einer Logik bearbeitet wird, die zum Auswerten einer Identifikation hergerichtet ist, und die Orts-Codierung beispielsweise von einer Logik bearbeitet wird, die zum Auswerten eines Ortes hergerichtet ist.

In Ausführungsformen kann vorgesehen sein, dass ein Versuch vorgenommen wird, eine Zeit-Codierung und/oder ein Zertifikat zu extrahieren. Auf diese Weise können der auswertenden Logik weitere Informationen bereitgestellt werden.

Es ist vorgesehen, dass auf der Grundlage der Identifikations-Codierung, ein Fahrplan des Fahrzeugs ermittelt wird. Es ist eine Datenbank vorgesehen, die die Fahrpläne von mit einer Identifikations-Kennung versehenen Fahrzeugen enthält. Somit kann eine Referenzinformation ermittelt werden, ob das in Betracht genommene Fahrzeug sich an dem festgestellten Ort aufhalten darf. Dies erfolgt durch einen Vergleich, ob die Orts-Codierung im Fahrplan enthalten ist.

Es ist vorgesehen, dass eine Warnung ausgegeben wird, falls die Orts-Codierung nicht im Fahrplan enthalten ist.

In Ausführungsformen kann vorgesehen sein, dass das Vergleichen, ob die Orts-Codierung im Fahrplan enthalten ist, mit einer Toleranzbreite durchgeführt wird. Somit kann beispielsweise nicht die exakte Position des Fahrzeugs herangezogen werden, die ja insbesondere bei satellitengestützter Navigation Schwankungen unterliegen kann, sondern ein Raumvolumenabschnitt. Es kann vorgesehen sein, dass der gesamte Raum zu diesem Zwecke in geeignete Raumvolumenabschnitte untergliedert ist.

In Ausführungsformen kann vorgesehen sein, dass, sofern die Zeit-Codierung extrahiert werden konnte, zusätzlich verglichen wird, ob die Kombination aus Orts-Codierung und Zeit-Codierung im Fahrplan enthalten ist. Auf diese Weise kann besonders zuverlässig und besonders sicher überprüft werden, ob das Fahrzeug sich zur betrachteten Zeit am betrachteten Ort befinden darf.

Es ist vorgesehen, dass, sofern das Zertifikat extrahiert werden konnte, unmittelbar nach dem Vergleichen zusätzlich eine Echtheitsprüfung und Gültigkeitsprüfung des Zertifikats vorgenommen wird. Hierzu kann es vorgesehen sein, dass eine Verbindung zu der das Zertifikat ausstellende Certification-Authority über das Internet aufgebaut wird.

In Ausführungsformen kann vorgesehen sein, dass zur Echtheitsprüfung eine Anfrage an die ausstellende Certification-Authority gestellt und das Ergebnis ausgewertet wird.

In einem Aspekt wird ein Computerprogrammprodukt zur dynamischen Kennzeichnung eines Fahrzeugs vorgeschlagen, umfassend ein computerlesbares Speichermedium mit darauf umfassten, durch einen Computer ausfuhrbaren Code, wobei der Code dazu hergerichtet ist, wenn er auf einem Computer ausgeführt wird, das Verfahren zur dynamischen Kennzeichnung eines Fahrzeugs durchzuführen.

In Ausführungsformen kann vorgesehen sein, dass eine Warnung ausgegeben wird, falls die Orts-Codierung nicht im Fahrplan enthalten ist.

In Ausführungsformen kann vorgesehen sein, dass das Vergleichen, ob die Orts-Codierung im Fahrplan enthalten ist, mit einer Toleranzbreite durchgeführt wird. Somit kann beispielsweise nicht die exakte Position des Fahrzeugs herangezogen werden, die ja insbesondere bei satellitengestützter Navigation Schwankungen unterliegen kann, sondern ein Raumvolumenabschnitt. Es kann vorgesehen sein, dass der gesamte Raum zu diesem Zwecke in geeignete Raumvolumenabschnitte untergliedert ist.

In Ausführungsformen kann vorgesehen sein, dass, sofern die Zeit-Codierung extrahiert werden konnte, zusätzlich verglichen wird, ob die Kombination aus Orts-Codierung und Zeit-Codierung im Fahrplan enthalten ist. Auf diese Weise kann besonders zuverlässig und besonders sicher überprüft werden, ob das Fahrzeug sich zur betrachteten Zeit am betrachteten Ort befinden darf.

In Ausführungsformen kann vorgesehen sein, dass, sofern das Zertifikat extrahiert werden konnte, unmittelbar nach dem Vergleichen zusätzlich eine Echtheitsprüfung und Gültigkeitsprüfung des Zertifikats vorgenommen wird. Hierzu kann es vorgesehen sein, dass eine Verbindung zu der das Zertifikat ausstellende Certification-Authority über das Internet aufgebaut wird.

In Ausführungsformen kann vorgesehen sein, dass zur Echtheitsprüfung eine Anfrage an die ausstellende Certification-Authority gestellt und das Ergebnis ausgewertet wird.

In einem Aspekt wird ein Computerprogrammprodukt zur dynamischen Kennzeichnung eines Fahrzeugs vorgeschlagen, umfassend ein computerlesbares Speichermedium mit darauf umfassten, durch einen Computer ausführbaren Code, wobei der Code dazu hergerichtet ist, wenn er auf einem Computer ausgeführt wird, das Verfahren zur dynamischen Kennzeichnung eines Fahrzeugs durchzuführen.

In einem Aspekt wird ein Computerprogrammprodukt zur Authentifikation eines Fahrzeugs vorgeschlagen, umfassend ein computerlesbares Speichermedium mit darauf umfassten, durch einen Computer ausführbaren Code, wobei der Code dazu hergerichtet ist, wenn er auf einem Computer ausgeführt wird, das Verfahren zur Authentifikation eines Fahrzeugs durchzuführen.

In einem Aspekt wird ein Datenträger mit einem Computerprogramm gemäß einem oder beider voranstehender Aspekte vorgeschlagen.

In einem weiteren Aspekt wird eine Fahrzeugkomponente vorgeschlagen, die dazu ausgebildet ist, ein Verfahren zur dynamischen Kennzeichnung eines Fahrzeugs auszuführen.

In einem weiteren Aspekt wird ein Fahrzeug mit einer Fahrzeugkomponente nach dem voranstehenden Aspekt vorgeschlagen.

In einem Aspekt wird eine stationäre Einrichtung vorgeschlagen, die vorgesehen ist, ein wie oben beschriebenes Verfahren zur Authentifikation eines Fahrzeugs auszuführen.

### Figuren

Im Weiteren werden Ausführungsformen der Erfindung mit Bezugnahme auf die Figuren der anliegenden Zeichnung erläutert. Es zeigt:
- Figur 1:: eine schematische Anordnung zur Veranschaulichung einer dynamischen Kennzeichnung eines Fahrzeugs;
- Figur 2:: ein Verfahren zur Authentifikation eines Fahrzeugs; und
- Figur 3:: Varianten der Anordnung der sicheren Signaturerstellungseinheit.

### Beschreibung

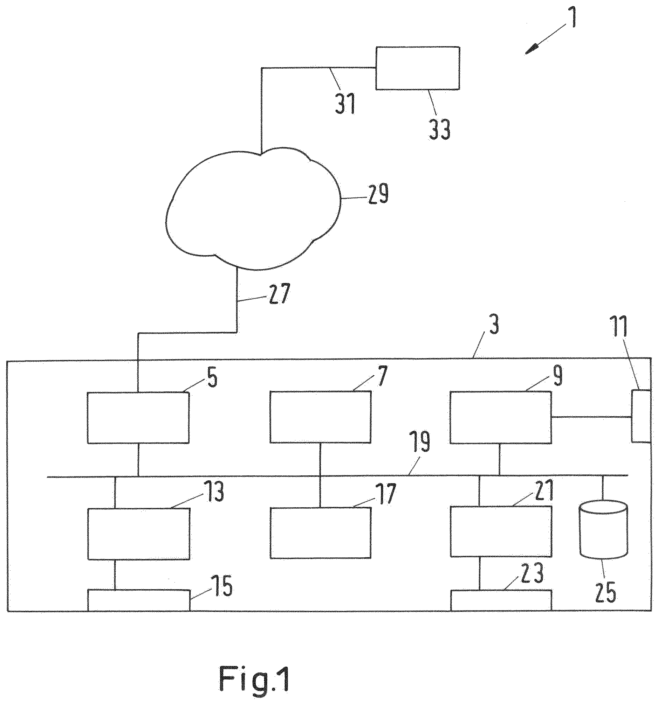

Figur 1 zeigt eine schematische Anordnung zur Veranschaulichung einer dynamischen Kennzeichnung eines Fahrzeugs.

Mit dem Bezugszeichen 1 ist eine schematische Anordnung zur Veranschaulichung einer dynamischen Kennzeichnung eines Fahrzeugs bezeichnet.

Das hier aus Gründen der Übersichtlichkeit nicht gezeigte Fahrzeug weist eine Fahrzeugkomponente 3 auf, die mit einer Datenverarbeitungseinrichtung versehen ist. Es kann vorgesehen sein, dass die Fahrzeugkomponente im Wesentlichen mit der Datenverarbeitungseinrichtung identisch ist: Über eine Daten-I/O-Kommunikations-Schnittstelle ist die Datenverarbeitungseinrichtung in der Lage, beispielsweise, über das Internet mit einer anderen Datenverarbeitungseinrichtung zu kommunizieren. Die Fahrzeugkomponente kann somit als ein Mitglied des sogenannten "Internet-of-Things", loT, angesehen werden.

Die Datenverarbeitungseinrichtung weist einen mit dem Bus 19 verbundenen Prozessor 7 auf, der in der Lage ist, Kommandos eines Computerprogramms, auch als ausführerbarer Code bezeichnet, auszuführen. Ein derartiges Computerprogramm kann in einem mit dem Bus 19 verbundenen Daten- und/oder Programmspeicher 17 abgelegt sein. Eine Kommunikation der Subkomponenten in der Fahrzeugkomponente kann über einen Bus 19 in der Fahrzeugkomponente ermöglicht sein. Der Daten- und/oder Programmspeicher 17 kann hergerichtet sein, Daten sowie auch Programme, also ausführbaren Code, zu speichern. Es kann vorgesehen sein, dass der Daten- und/oder Programmspeicher 17 untergliedert ist. Beispielsweise kann vorgesehen sein, dass ein Teil des Daten- und/oder Programmspeicher 17 ein fest verbauter Arbeitsspeicher, Random-Access-Memory, RAM, ist, und ein anderer Teil ein entnehmbarer Speicher, wie beispielsweise eine Speicherkarte. In diesem Zusammenhang kann es möglich sein, dass der ausführbare Code, der Anweisungen zur Ausführung eines oder mehrerer der hierein beschriebenen Verfahren enthalten kann, gemeinsam mit der Speicherkarte ein Computerprogrammprodukt bildet.

Die Fahrzeugkomponente 3 kann eine mit dem Bus 19 verbundene Schnittstelle 9 zu einem Fahrzeug-Bus, genauer zu einer Kupplung 11 zu einem Fahrzeug-Bus aufweisen. Ein bekannter Fahrzeug-Bus ist beispielsweise der sogenannte CAN-Bus. Bei der Kupplung kann es sich um eine Steckverbindung handeln. Auf diese Weise kann die Fahrzeugkomponente 3, beispielsweise, Informationen hinsichtlich Steuersignalen, die eine Bewegung des Fahrzeugs steuern sollen, erhalten.

Dies kann hilfreich sein, wenn Signale für eine Ortsbestimmung nicht ausreichend sind, um auf diese Weise trotz der unzureichenden Signalversorgung einen momentanen Ort des Fahrzeugs schätzen zu können.

Die Fahrzeugkomponente 3 weist eine Schnittstelle 13 zu einem Signalgeber auf, den sie physikalisch über eine Kupplung 15 zu einem Signalgeber ansteuern kann. Der Signalgeber ist hier nicht gezeigt. Bei dem Signalgeber kann es sich um einen optischen, einen akustischen oder einen elektromagnetischen Signalgeber handeln. In Ausführungsformen kann vorgesehen sein, keine Schnittstelle 13 mit Kupplung 15 vorzusehen - in einem derartigen Falle kann vorgesehen sein, die Kommunikation über den Fahrzeug-Bus laufen zu lassen und den Signalgeber über den Fahrzeug-Bus anzusprechen.

Ferner kann die Fahrzeugkomponente 3 eine mit dem Bus 19 verbundene Ortsmesskomponente 21 aufweisen. Die Ortsmesskomponente 21 wird mit einer - nicht gezeigten - Antenne 23 verbunden sein, um elektromagnetische Signale, die zur Ortsbestimmung geeignet sein können, zu empfangen. Zur Ortsbestimmung geeignete Signale können beispielsweise Signale von Navigationssatelliten sein. Zur Ortsbestimmung können aber auch Signale von Mobilfunkmasten oder WLAN-Basisstationen sein, deren Ort bekannt ist. Diese können beispielsweise durch Ermitteln der Signalstärke und Triangulation zur Ortsbestimmung beitragen.

Neben der Ortsmesskomponente 21 kann eine mit dem Bus 19 verbundene Datenbank 25 mit ortsbezogenen Informationen vorgesehen sein. Mit Hilfe der Datenbank 25 kann die Ortsmesskomponente 21 mit oder ohne Unterstützung des Prozessors ermitteln, welchem Raumabschnitt die gerade gemessenen Ortsangaben zuzuordnen sind, so dass dem Signalgeber als Ortsinformation oder als Orts-Codierung nur eine Kennung für den aktuellen Raumabschnitt anstelle der Geokoordinaten zuzuführen sind.

Über die mit dem Bus 19 verbundene Schnittstelle 5 kann die Fahrzeugkomponente 3 via einer Verbindung 27 zu einem öffentlichen Datennetz 29 via einer weiteren Verbindung 31 mit einer Certification-Authority 33 kommunizieren. So kann eine Prüfung einer elektronischen Unterschrift unter einer Authentifizierungs-Codierung vorgenommen werden. Ferner ist es möglich, ein dem Fahrzeug zugeordnetes Zertifikat zu prüfen, um eine höhere Sicherheit bei der Prüfung der elektronischen Unterschrift zu erlangen.

Die voranstehend beschriebene Fahrzeug-Komponente ist somit in der Lage, ein Verfahren zur dynamischen Kennzeichnung eines Fahrzeugs auszuführen und umfasst: Bereitstellen einer Identifikations-Codierung mit einer das Fahrzeug identifizierenden Information; Bestimmen einer Ortsinformation, die einen Ort des Fahrzeugs bezeichnet; Bereitstellen einer Orts-Codierung mit der Ortsinformation; Kombinieren der Identifikations-Codierung und der Orts-Codierung, um eine Authentifizierungs-Codierung bereitzustellen; Signieren der Authentifizierungs-Codierung, um eine Signatur-Codierung bereitzustellen; Kombinieren der Authentifizierungs-Codierung mit der Signatur-Codierung, um eine Ausgabe-Codierung bereitzustellen; und Ausgeben der Ausgabe-Codierung.

Dabei kann das Kombinieren von Codierungen durch eine Verkettung, eine Konkatenation oder eine sonstige Aggregation bereitgestellt sein. Es wird erwogen, die Ortsinformation auf der Grundlage eines gemessenen Ortes und einer Zuordnung des gemessenen Ortes zu einem Raumgitter zu bilden.

Dabei kann der gemessene Ort durch eine oder mehrere Messungen auf der Grundlage eines oder mehrerer Satellitensignale, durch eine Abstandsmessung und/oder Triangulation mit bekannten Signalstrahlungsquellen, oder durch eine Kombination davon bestimmt werden.

Es kann eine eine Zeitinformation repräsentierende Zeit-Codierung bereitgestellt werden, wobei die Authentifizierungs-Codierung durch Kombinieren der Identifikations-Codierung, der Orts-Codierung und der Zeit-Codierung gebildet wird. Dabei kann die Zeitinformation durch die Satellitensignale und/oder sonstigen Signalstrahlungsquellen gebildet werden. Es kann auch sein, dass die Zeitinformation durch eine interne Uhr im Fahrzeug gebildet wird. Das Signieren kann mittels asymmetrischer Kryptografie vorgenommen werden. Dabei wird erwogen, dies mit einem privaten Schlüssel vorzunehmen.

Die Ausgabe-Codierung kann vor der Ausgabe mit einem Zertifikat einer Certification-Authority oder mit einem Verweis darauf kombiniert werden.

Das Zertifikat kann zumindest die von der Certification-Authority signierte Kombination von der Identifikations-Codierung mit dem öffentlichen Schlüssel des Fahrzeugs umfassen. Das Zertifikat kann seine eigene Gültigkeitsdauer umfassen.

Das Verfahren kann in einem unbemannten Fahrzeug oder in einem unbemannten Fahrzeug ausgeführt werden. Dabei kann das unbemannte Fahrzeug eine Drohne, ein Boot, ein straßengebundenes Auto, oder ein gleisgebundener Zug sein.

Das Ausgeben der Ausgabe-Codierung kann mittels eines optischen, akustischen oder elektromagnetischen Ausgabegeräts erfolgen.

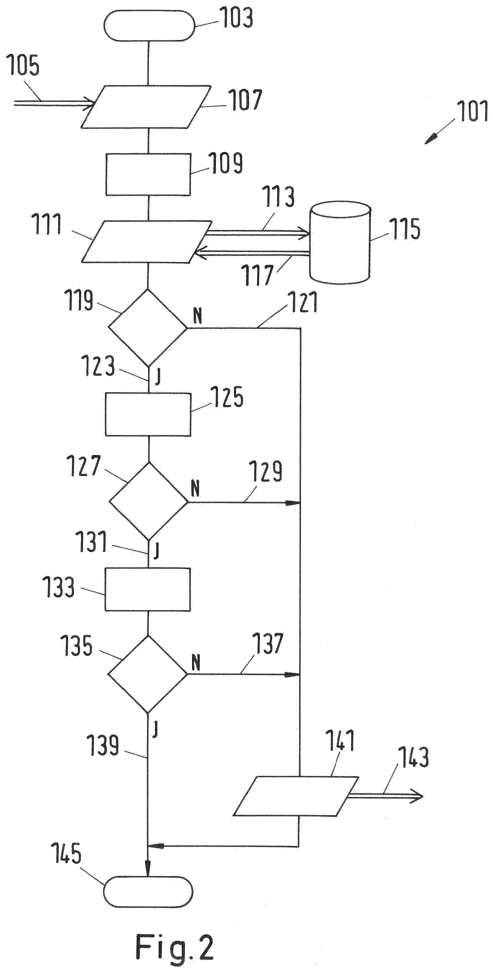

Figur 2 veranschaulicht ein Verfahren 101 zur Authentifikation eines Fahrzeugs. Das Verfahren kann die Schritte umfassen: Erfassen der ausgegebenen Ausgabe-Codierung des Fahrzeugs; Extrahieren der Identifikations-Codierung; Extrahieren der Orts-Codierung, Versuch der Extraktion der Zeit-Codierung und des Zertifikats; Auf der Grundlage der Identifikations-Codierung, Ermitteln eines Fahrplans des Fahrzeugs; Vergleichen, ob die Orts-Codierung im Fahrplan enthalten ist; und Ausgeben einer Warnung, falls die Orts-Codierung nicht im Fahrplan enthalten ist. Es wird erwogen, dass dieses Verfahren 101 von einer ortsfesten Basisstation ausgeführt wird.

Im Einzelnen beginnt das Verfahren 101 mit dem Schritt 103. Im Schritt 107 empfängt die Fahrzeugkomponente mittels eines ihrer Sensoren via 105 eine ausgegebene Ausgabe-Codierung eines Fahrzeugs, dessen Authentizität zu überprüfen ist.

In einem Schritt 109 wird zumindest eine Identifikations-Codierung des Fahrzeugs aus der Ausgabe-Kennung extrahiert.

In einem Schritt 111 wird eine Datenbankabfrage 113 an eine Datenbank 115 abgesandt, mit einer Anforderung, die aktuellen Informationen zu dem Fahrzeug mit der übersandten Identifikations-Codierung zurückzuliefern, via 117. Die aktuellen Informationen enthalten erlaubte Orts- und Zeitangaben des Fahrzeugs, mit anderen Worten, die Orte und Zeiten, wann sich das Fahrzeug wo aufhalten oder befinden darf. Diese Informationen können in Form eines Fahrplans bereitgestellt werden.

In einem Entscheidungsschritt 119 wird festgestellt, ob das Fahrzeug überhaupt in der Datenbank gefunden wurde. Falls nein, wird das Verfahren über den Zweig 121 fortgesetzt und es wird in 141 eine Warnung 143 ausgegeben.

Die Warnung 143 kann über ein öffentliches Netz automatisch an eine zuständige Stelle gesandt werden, wo weitere Veranlassungen getroffen werden, wie beispielsweise Entfernen des Fahrzeugs und dergleichen.

Falls im Entscheidungsschritt 119 festgestellt wurde, dass das Fahrzeug in der Datenbank gefunden wurde, so wird das Verfahren über den Zweig 123 fortgesetzt, und es wird in 125 die Orts-Codierung des Fahrzeugs aus der Ausgabe-Codierung extrahiert.

Im nachfolgenden Entscheidungsschritt 127 wird festgestellt, ob sich das Fahrzeug überhaupt an diesem Ort aufhalten darf. Befindet sich das Fahrzeug an einem Ort, wo es nicht sein darf, so wird das Verfahren über den Zweig 129 fortgesetzt und die weiteren Maßnahmen wir oben bereits beschrieben werden ergriffen.

Eine Plausibilität des Ortes wird durch Bereitstellung einer Mehrzahl von Basisstationen sichergestellt: Ist es dem Fahrzeug beispielsweise gestattet, sich in Flensburg aufzuhalten, und fälscht es seine Ortsangabe dahingehend, dass es sich gerade in Flensburg befindet, und wird es von einer Basisstation in Kiel erfasst, so ist heuristisch unmittelbar klar, dass hier eine Fälschung vorliegen muss. Es wird dabei davon ausgegangen, dass eine Basisstation natürlich Kenntnis von ihrer eigenen örtlichen Lage hat. In einem derartigen Fall kann und soll eine Warnung ausgelöst werden.

Ist der Aufenthaltsort grundsätzlich gestattet, so kann das Verfahren über 131 fortgesetzt werden und in 133 die Zeit-Codierung herangezogen werden, um festzustellen, 135, ob sich das Fahrzeug zu gerade dieser Zeit an diesem Ort aufhalten darf. Ist das nicht erlaubt, so wird das Verfahren über 137 fortgesetzt und wie oben geschildert eine Warnung ausgegeben. Sind hingegen Aufenthaltsort und Zeit des Fahrzeugs gemäß der Datenbank 115 zulässig, so setzt das Verfahren in 139 fort und das Verfahren wird in 145 beendet.

Dem Fachmann ist klar, dass die Vergleichsschritte hinsichtlich Identität, erlaubtem Ort und erlaubter Zeit des Fahrzeugs auch in anderer Reihenfolge oder zeitgleich geprüft werden können. Der Fachmann wird ferner verstehen, dass das Verfahren beliebig oft zu wiederholen ist.

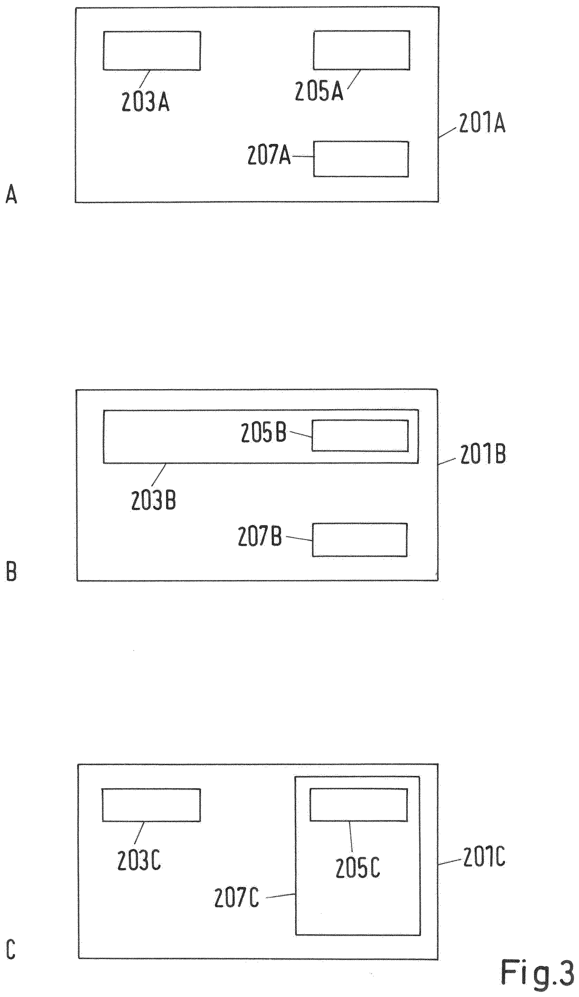

Figur 3 veranschaulicht mit Figuren 3A, 3B und 3C Varianten der Anordnung der sicheren Signaturerstellungseinheit.

Vorliegend wird eine Komponente zur Unterstützung der Erfassung und Steuerung künftig in großer Anzahl aufkommender Bewegungen von Fahrzeugen, beispielsweise Flugbewegungen von UAVs, in unserem Lebensalltag beschrieben. Die Identifizierung eines UAVs kann nicht, etwa wie in einem PKW, über eine rein visuelle Kennung durchgeführt werden. UAVs sind schnell, in der Regel häufig klein und können Flugrichtung, -höhe und Geschwindigkeit rasch ändern. Die Lenkung von Verkehrsströmen und Identifikation der sich darin befindlichen UAVs bedarf daher einer dem Stand der Technik angepassten, geeigneteren Lösung. Verlässliche Identifizierungsdaten, verbunden mit einer zuverlässigen Lokalisierungsinformation beispielsweise satellitengestützter Navigationsinstrumente, sind so zu übertragen, dass ihre Herkunft dem Betreiber des UAVs und damit dessen Absicht eindeutig zuzuordnen sind. Mit verlässlichen Informationen über den Betreiber eines UAVs lassen sich Sicherheitsbereiche besser schützen, Kollisionen vermeiden und vergleichsweise effizientere Streckenführungen realisieren. Dieselben Erwägungen und Vorteile lassen sich selbstverständlich auf straßengebundene Fahrzeuge und Wasserfahrzeuge gleichwertig übertragen.

Ein Vorteil kann sein, dass sich auf diese Weise ein Fahrzeug eindeutig einem Betreiber zuordnen lassen kann. Auf diese Weise kann der Verkehr von Fahrzeugen autorisiert und/oder überwacht werden.

Vorliegend wird das an sich bekannte Schema einer Public Key Infrastructure, PKI, bestehend aus den Komponenten:
- Teilkomponente 1: Sichere Signaturerstellungseinheit, SSEE
- Teilkomponente 3: Identifizierungsdienst
- Teilkomponente 4: Registrierungsdienst
- Teilkomponente 5: Sperrdienst
ergänzt um eine Teilkomponente 2 "Kommunikationskomponente" vorgeschlagen, um auf ein sicheres und eindeutiges Verfahren zur vertrauenswürdigen Identifizierung von Fahrzeugen zu erhalten.

Im Folgenden wird Bezug auf eine Ausführungsform genommen, in der das Fahrzeug als UAV ausgebildet ist - dem Fachmann ist aber klar, dass die nachstehenden Lehren unverändert auf straßengebundene Fahrzeuge und Wasserfahrzeuge anwendbar sind.

### Teilkomponente 1: Sichere Signaturerstellungseinheit (SSEE)

Allgemeine Beschreibung: Eine dem UAV während der Bewegungs- oder Flugphase beigefügte sichere Signaturerstellungseinheit, SSEE, dient als Grundlage der Zuordnung des UAV zu dessen registrierten Betreiber.
(1.1) Eine mit dem UAV verbundene SSEE,
(1.2) auf der ein Schlüsselpaar (PK (Public Key) u. PrK (Private Key), erzeugt mittels eines geeigneten, kryptologischen Verfahren,
(1.3) das in einem separat von der SSEE stehenden Verfahren erzeugt und auf die SSEE geeignet eingebracht wurde
   ODER
(1.4) mit Hilfe der auf der SSEE residierenden Kryptoverfahren erzeugt wurde
   UND
(1.5) auf der ein Zertifikat (Z) gespeichert wird, das den öffentlichen Schlüssel PK, der zum privaten Schlüssel PrK gehört, enthält.
(1.6) Das Zertifikat (Z) ist signiert von einem vertrauenswürdigen, privaten Schlüssel (PrKO) durch Verwendung eines geeigneten, kryptologischen Verfahrens, das unter der alleinigen Kontrolle einer regulierenden Organisationseinheit (beispielsweise der einer Landesbehörde oder einer Vereinigung) steht.

**SSEE-Option 1:** Die SSEE ist nicht mit dem Flugcontroller des UAVs verbunden,
(2.1) sondern separat mechanisch mit dem UAV zu koppeln,
(2.2) so dass die SSEE dem UAV zu dessen Inbetriebnahme nicht notwendigerweise, jedoch zu dessen Identifizierung während des Fluges anbei gefügt werden kann.
(2.3) Die Inbetriebnahme der SSEE erfolgt durch eine eindeutige Nutzerauthentifizierung (beispielsweise durch Eingabe einer PIN, die nur dem registrierten Nutzer des UAVs bekannt ist). Die Nutzung des UAVs ist technisch unabhängig von der Inbetriebnahme der SSEE.
   ODER

### SSEE-Option 2: Die SSEE ist derart

(3.1) mit dem Flugcontroller (FC) des UAV verbunden,
(3.2) so dass die SSEE dem UAV zu dessen Inbetriebnahme notwendigerweise anbei gefügt werden MUSS.
(3.3) so dass dessen Inbetriebnahme abhängig ist von einer eindeutigen Nutzerauthentifizierung (beispielsweise durch Eingabe einer PIN, die nur dem registrierten Nutzer des UAVs bekannt ist).
(3.3) Die Inbetriebnahme der SSEE erfolgt durch eine eindeutige Nutzerauthentifizierung (beispielsweise durch Eingabe einer PIN, die nur dem registrierten Nutzer des UAVs bekannt ist). Die Nutzung des UAVs ist technisch abhängig von der Inbetriebnahme der SSEE.
   ODER

### SSEE-Option 3: Die SSEE ist mit der Kommunikationskomponente K verbunden,

(4.1) so dass die Funktion der Kommunikationskomponente in einem geschlossenen, gemeinsamen System arbeitsfähig nach
(4.2) Authentifizierung des Nutzers ist (beispielsweise durch Eingabe einer PIN, die nur dem registrierten Nutzer des UAVs bekannt ist).
(4.3) Die Inbetriebnahme der SSEE erfolgt durch eine eindeutige Nutzerauthentifizierung (beispielsweise durch Eingabe einer PIN, die nur dem registrierten Nutzer des UAVs bekannt ist). Die Nutzung des UAVs ist technisch unabhängig von der Inbetriebnahme der SSEE.

### Teilkomponente 2: Kommunikationskomponente (K)

### e2.1) Ein Gerät,

(1) fest oder lose integriert in das UAV
(2) das in regelmäßigen Abständen
(3a) via Funkstrecke ODER
(3b) optisch ODER
(3c) über eine andere, geeignete Kommunikationsstrecke,
(4) die mittels des in der Teilkomponente 1 "SSEE" gespeicherten Schlüssels PrK signierte Informationen
(5a) zu seiner eindeutigen und seinem registrierten Betreiber zuordenbarer Identifikation,
(5b) seine Position (und ggf. andere Informationen (Flugziel, Flugzweck, aktuelle Geschwindigkeit, aktuelle Richtung))
ungerichtet aussendet

### Teilkomponente 3 "Identifizierungskomponente"

### e3.1)

(1) Ein Dienst,
(2) der den Betreiber eines UAV, etwa
(2a) einen Piloten (Person) ODER
(2b) eine Organisation
(3) eindeutig identifiziert, z.B. durch
(3.1) persönliches Erscheinen und Vorlegen eines gültigen Ausweisdokumentes ODER
(3.2) Videoidentifkation ODER
(3.3) eine andere, geeignete Identifizierungsform (beispielsweise Handelsregisternachweise im Falle von Organisationen).

### Teilkomponente 4 "Registrierungsdienst"

Ein Dienst, der
(1) die durch den Identifizierungsdienst ermittelten Betreiberdaten eines UAVs und den öffentlichen Schlüssel (PK) in einem Zertifikat zusammenfasst,
(2) das Zertifikat durch einen ausschließlich ihm zur Verfügung stehenden, privaten Schlüssel (PrKO) signiert und
(3) das Zertifikat auf den mit dem UAV verknüpften SSEE zurücklädt.

### Teilkomponente 5 "Sperrdienst",

Ein Dienst, der
im berechtigten Falle (beispielsweise eines Vertrauensverlust in den Betreiber des UAVs)
   ODER
nach Meldung des Betreibers zum Verlust oder Verkauf des ihm durch ein Zertifikat eindeutig zugeordneten UAVs oder einer Identifikationseinheit
das oder die betroffenen Zertifikate sperrt.

In Figur 3 sind unterschiedliche denkbare Ausführungen veranschaulicht, wobei gleich oder ähnliche Bezugszeichen gleiche oder ähnliche Komponenten bezeichnen.

Figur 3A zeigt eine Konfiguration 201A, in der ein Flugcontroller, FC, 203A, eine sichere Signaturerstellungseinheit, SSEE, 205A und eine Kommunikationskomponente, K, 207A als getrennte, technische Komponenten bereitgestellt sind. Der Fachmann versteht, dass der Flugcontroller nur eine spezifische Ausführungsform für ein UAV ist - im Falle, beispielsweise eines straßengebundenen Fahrzeugs wird es sich um einen Fahrtencontroller 203A handeln, der Navigationskenntisse und Verkehrsregeln eines Straßennetzes aufweist.

Diese Konfiguration kann die Vorteile aufweisen, dass eine einfache Installation über Schnittstellen ermöglicht ist und, dass bewährte Technik eingesetzt werden kann, wobei die Kommunikation über standardisierte Schnittstellen, serielle Verbindung o.ä., durchgeführt werden kann. Nachteilig ist allerdings, dass eine Aktivierung des FC, und damit verbundene Inbetriebnahme des UAV, über die SSEE schwierig zu erzwingen sein kann.

Figur 3B zeigt eine Konfiguration 201B, in der der FC 203B und die SSEE 205B als gemeinsame Komponente aufgebaut sind. Die SSEE wird damit zu einer integrierten Funktion des FC. Vorteilhaft an dieser Konfiguration kann sein, dass die Funktionalität der SSEE unmittelbare Grundlage zur Aktivierung des FC sein kann. Somit kann die SSEE auch Grundlage zur Aktivierung des Fahrzeugs sein. Ein weiterer Vorteil kann sein, dass eine Zertifizierbarkeit de UAV vereinfacht sein kann, da die Inbetriebnahme des FC abhängig gemacht werden kann von der Erstinitialisierung der SSEE durch die Signatur eines öffentlichen Schlüssels PK durch den privaten Schlüssel PrKO der autorisierenden Organisation.

Figur 3C zeigt eine Konfiguration, in der K und SSEE als gemeinsame Komponente aufgebaut sind. Die SSEE kann dabei zu einer integrierten Funktion der Kommunikationskomponente K werden.

Ein Vorteil dieser Konfiguration kann sein, dass die Funktionalität und Evolution des sich technisch rasch weiterentwickelnden FC-Marktes ungestört sein kann. Ferner kann eine Kommunikationskomponente mit SSEE von geeigneten Organisationen zertifiziert und produziert werden, und durch den UAV-Betreiber dem UAV im Flug anbei zu fügen sein kann.

In einem Beispiel können Identifikation und Zertifikatserzeugung wie folgt vorgenommen werden:

| Betreiber | | Zertifizierende Organisation |
|---|---|---|
| 1. SSEE erwerben | | |
| 2. Zertifizierungsantrag stellen | → | 3. Zertifizierungsantrag erhalten |
| 4. Identität belegen | → | 5. Identifizierung durchführen |
| 6. SSEE: Schlüsselpaar erzeugen | | |
| 7. SSEE: Öffentlichen Schlüssel PK übermitteln | → | 8. Schlüssel mit Identitätsdaten und öffentlichem Schlüssel signieren |
| | ← | 9. Zertifikat erzeugen, versenden und gegebenenfalls veröffentlichen |
| 10. SSEE: Zertifikat empfangen und speichern | ← | |

Zusammengefasst ist eine PKI basierte Lösung zur Erzeugung von eindeutigen, elektronischen Kennzeichnungen von Fahrzeugen bereitgestellt.

### Bezugszeichenliste

- 1: schematische Anordnung zur Veranschaulichung einer dynamischen Kennzeichnung eines Fahrzeugs
- 3: Fahrzeugkomponente
- 5: Daten-I/O-Kommunikations-Schnittstelle
- 7: Prozessor
- 9: Schnittstelle zu einem Fahrzeug-Bus
- 11: Kupplung zu einem Fahrzeug-Bus
- 13: Schnittstelle zu einem Signalgeber
- 15: Kupplung zu einem Signalgeber
- 17: Daten- und/oder Programmspeicher
- 19: Bus der Fahrzeugkomponente
- 21: Ortsmesskomponente
- 23: Antenne der Ortsmesskomponente
- 25: Datenbank mit ortsbezogenen Informationen
- 27: Verbindung von der Fahrzeugkomponente zu einem öffentlichen Datennetz
- 29: öffentliches Datennetz
- 31: Verbindung von einer Certification-Authority zum öffentlichen Datennetz
- 33: Certification-Authority

- 101: Verfahren zur Authentifikation eines Fahrzeugs
- 103: Beginn des Verfahrens
- 105: Empfang einer Ausgabe-Codierung eines Fahrzeugs
- 107: Schritt zum Empfang der Ausgabe-Codierung
- 109: Extrahieren von Codierungen aus der Ausgabe-Codierung
- 111: Datenbankkommunikation
- 113: Datenbankabfrage
- 115: Datenbank
- 117: Datenbankantwort
- 119: Prüfung, ob Fahrzeug in Datenbank gefunden wurde
- 121: Verzweigung falls nein
- 123: Verzweigung falls ja
- 125: Extrahieren und/oder Bereitstellen der Orts-Codierung des Fahrzeugs aus der Ausgabe-Codierung
- 127: Prüfung, ob dies ein gemäß Datenbankeintrag erlaubter Ort ist
- 129: Verzweigung falls nein
- 131: Verzweigung falls ja
- 133: Extrahieren und/oder Bereitstellen der Zeit-Codierung des Fahrzeugs
- 135: Prüfen, ob die Zeit-Codierung zur erlaubten Zeit zum aktuellen Ort passt
- 137: Verzweigung falls nein
- 139: Verzweigung falls ja
- 141: Vorbereitung zur Ausgabe einer Warnung
- 143: Ausgabe der Warnung
- 145: Ende des Verfahrens
- 201: Konfiguration
- 203: Flugcontroller oder Fahrtencontroller
- 205: SSEE
- 207: Kommunikationskomponente

## Patentansprüche

1. Computer-implementiertes Verfahren zur dynamischen Kennzeichnung eines Fahrzeugs durch eine Fahrzeugkomponente (3) des Fahrzeugs, die mit einer
Datenverarbeitungseinrichtung versehen ist, wobei die Datenverarbeitungseinrichtung einen mit einem Bus (19) verbundenen Prozessor (7) aufweist, der in der Lage ist, Kommandos eines Computerprogramms auszuführen, das in einem mit dem Bus (19) verbundenen Programmspeicher (17) abgelegt ist, wobei es sich bei den Kommandos des Computerprogramms um ausführbaren Code handelt, der Anweisungen zur Ausführung des Verfahrens enthält, umfassend:
- Bereitstellen einer Identifikations-Codierung mit einer das Fahrzeug identifizierenden Information;
- Bestimmen einer Ortsinformation, die einen Ort des Fahrzeugs bezeichnet, wobei der gemessene Ort durch eine oder mehrere Messungen auf der Grundlage eines oder mehrerer Satellitensignale, durch eine Abstandsmessung und/oder Triangulation mit bekannten Signalstrahlungsquellen, oder durch eine Kombination davon bestimmt wird;
- Bereitstellen einer elektronisch verarbeitbaren Orts-Codierung mit der Ortsinformation;
- Kombinieren der Identifikations-Codierung und der Orts-Codierung, um eine Authentifizierungs-Codierung bereitzustellen, wobei das Kombinieren von Codierungen durch eine Verkettung, eine Konkatenation oder eine sonstige Aggregation bereitgestellt wird;
- elektronisches Signieren der Authentifizierungs-Codierung, um eine Signatur-Codierung bereitzustellen, wobei das Signieren mittels asymmetrischer Kryptografie, mittels eines privaten Schlüssels des Fahrzeugs, vorgenommen wird, wobei das Signieren ein Berechnen eines Hashwerts der zu signierenden Codierung und ein Verschlüsseln des Hashwerts mit dem privaten Schlüssel des Fahrzeugs umfasst;
- Kombinieren der Authentifizierungs-Codierung mit der Signatur-Codierung, um eine Ausgabe-Codierung bereitzustellen, wobei das Kombinieren der Authentifizierungs-Codierung mit der Signatur-Codierung durch eine Verkettung, eine Konkatenation oder eine sonstige Aggregation bereitgestellt wird, wobei die Ausgabe-Codierung vor einer Ausgabe zusätzlich mit einem Zertifikat einer Certification-Authority (33) oder mit einem Verweis darauf kombiniert wird, wobei das Zertifikat zumindest die von der Certification-Authority (33) signierte Kombination von der Identifikations-Codierung mit einem öffentlichen Schlüssel des Fahrzeugs umfasst; und
- Ausgeben der Ausgabe-Codierung, damit durch einen Empfänger der ausgegeben Ausgabe-Codierung ermittelt werden kann, ob das Fahrzeug sich an dem festgestellten Ort aufhalten darf, anhand eines Vergleichs, ob die Orts-Codierung in einem Fahrplan des Fahrzeugs enthalten ist, wobei die ausgegebene Ausgabe-Codierung mit dem Zertifikat der Certification-Authority (33) oder mit dem Verweis darauf kombiniert ist, wobei das Ausgeben der Ausgabe-Codierung mittels eines optischen, akustischen oder elektromagnetischen Ausgabegeräts erfolgt.

2. Verfahren nach dem vorhergehenden Anspruch, wobei die Ortsinformation auf der Grundlage eines gemessenen Ortes und einer Zuordnung des gemessenen Ortes zu einem Raumgitter gebildet wird.

3. Verfahren nach einem der voranstehenden Ansprüche, wobei eine eine Zeitinformation repräsentierende Zeit-Codierung bereitgestellt wird, wobei die Authentifizierungs-Codierung durch Kombinieren der Identifikations-Codierung, der Orts-Codierung und der Zeit-Codierung gebildet wird.

4. Verfahren nach einem der Ansprüche 1 bis 3, sofern zurückbezogen auf Anspruch 3, wobei die Zeitinformation durch die Satellitensignale und/oder sonstigen Signalstrahlungsquellen gebildet wird oder wobei die Zeitinformation durch eine interne Uhr im Fahrzeug gebildet wird.

5. Computer-implementiertes Verfahren zur Authentifikation eines Fahrzeugs durch eine stationäre Einrichtung, wobei in dem Fahrzeug ein Verfahren zur dynamischen Kennzeichnung des Fahrzeugs nach einem der voranstehenden Ansprüche ausgeführt wird, wobei das Verfahren zur Authentifikation des Fahrzeugs durch die stationäre Einrichtung umfasst:
- Erfassen der ausgegebenen Ausgabe-Codierung des Fahrzeugs mit einem Sensor, der auf die optischen, akustischen oder elektromagnetischen Signale des Fahrzeugs anspricht, welcher das erfasste Signal in elektronischer Form an einen dafür vorgesehenen Rechner mit Prozessor, Speicher, Sensor-Anschluss, Ausgabe-Anschluss und verbindenden Bus weitergibt;
- Extrahieren der Identifikations-Codierung;
- Extrahieren der Orts-Codierung,
- Extrahieren des Zertifikats;
- Auf der Grundlage der Identifikations-Codierung, Ermitteln eines Fahrplans des Fahrzeugs aus einer Datenbank (115), die Fahrpläne von mit einer Identifikations-Kennung versehenen Fahrzeuge enthält, um zu ermitteln, ob das Fahrzeug sich an dem festgestellten Ort aufhalten darf, anhand eines Vergleichs, ob die Orts-Codierung in dem Fahrplan des Fahrzeugs enthalten ist;
- Vergleichen, ob die Orts-Codierung im Fahrplan enthalten ist;
- Unmittelbar nach dem Vergleichen zusätzliches Vornehmen einer Echtheitsprüfung und Gültigkeitsprüfung des Zertifikats, um sicherzustellen, dass das Fahrzeug dasjenige ist, das es durch Ausgabe der Ausgabe-Codierung vorgibt zu sein; und
- Ausgeben einer Warnung, falls die Orts-Codierung nicht im Fahrplan enthalten ist.

6. Verfahren nach dem vorhergehenden Anspruch, wobei die erfasste Authentifizierungs-Codierung durch Kombinieren der Identifikations-Codierung, der Orts-Codierung und einer Zeit-Codierung gebildet ist, wobei das Verfahren zur Authentifikation des Fahrzeugs durch die stationäre Einrichtung ferner umfasst:
- Extrahieren der Zeit-Codierung,
- zusätzliches Vergleichen, ob die Kombination aus Orts-Codierung und Zeit-Codierung im Fahrplan enthalten ist.

7. Verfahren nach einem der voranstehenden Ansprüche 5 bis 6, wobei zur Echtheitsprüfung eine Anfrage an die ausstellende Certification-Authority (33) gestellt und das Ergebnis ausgewertet wird.

8. Computerprogrammprodukt umfassend ein computerlesbares Speichermedium mit darauf umfassten, durch einen Computer ausführbaren Code, wobei der Code dazu hergerichtet ist, wenn er auf einem Computer ausgeführt wird, das Verfahren nach einem der vorhergehenden Ansprüche durchzuführen.

9. Fahrzeugkomponente (3) eines Fahrzeugs, die mit einer Datenverarbeitungseinrichtung versehen ist, wobei die Datenverarbeitungseinrichtung einen mit einem Bus (19) verbundenen Prozessor (7) aufweist, der in der Lage ist, Kommandos eines Computerprogramms auszuführen, das in einem mit dem Bus (19) verbundenen Programmspeicher (17) abgelegt ist, wobei es sich bei den Kommandos des Computerprogramms um ausführbaren Code handelt, der Anweisungen zur Ausführung eines Verfahrens nach einem der Ansprüche 1 bis 4 enthält, wodurch die Fahrzeugkomponente (3) dazu ausgebildet ist, ein Verfahren nach einem der Ansprüche 1 bis 4 auszuführen.

10. Fahrzeug mit einer Fahrzeugkomponente (3) nach Anspruch 9, wobei das Fahrzeug ferner ein optisches, akustisches oder elektromagnetisches Ausgabegerät zum Ausgeben der Ausgabe-Codierung umfasst.

11. Stationäre Einrichtung, die einen Sensor umfasst, der auf die optischen, akustischen oder elektromagnetischen Signale des Fahrzeugs anspricht, welcher das erfasste Signal in elektronischer Form an einen dafür vorgesehenen Rechner mit Prozessor, Speicher, Sensor-Anschluss, Ausgabe-Anschluss und verbindenden Bus der Einrichtung weitergibt, wobei die Einrichtung dazu ausgebildet ist, ein Verfahren nach einem der Ansprüche 5 bis 7 auszuführen.

## Claims

1. A computer-implemented method for dynamically marking a vehicle by means of a vehicle component (3) of the vehicle, which is provided with a data processing device, wherein the data processing device has a processor (7) connected to a bus (19), the processor being capable of executing commands of a computer program that is stored in a program memory (17) connected to the bus (19), wherein the commands of the computer program are executable code containing instructions for carrying out the method, comprising:
- providing an identification encoding having information identifying the vehicle;
- determining location information designating a location of the vehicle, wherein the measured location is determined by one or more measurements based on one or more satellite signals, by a distance measurement and/or triangulation with known signal radiating sources, or by a combination thereof;
- providing an electronically processable location encoding having the location information;
- combining the identification encoding and the location encoding in order to provide an authentication encoding, wherein the combining of encodings is provided by a chaining, a concatenation or another aggregation;
- electronically signing the authentication encoding in order to provide a signature encoding, wherein the signing is performed by means of asymmetric cryptography using a private key of the vehicle, wherein the signing comprises a calculating of a hash value of the encoding to be signed and an encrypting of the hash value with the private key of the vehicle;
- combining the authentication encoding with the signature encoding in order to provide an output encoding, wherein the combining of the authentication encoding with the signature encoding is provided by a chaining, a concatenation or another aggregation, wherein the output encoding, before being output, is additionally combined with a certificate of a certification authority (33) or with a reference thereto, wherein the certificate comprises at least the combination, signed by the certification authority (33), of the identification encoding with a public key of the vehicle; and
- output ting the output encoding, so that it can be determined by a receiver of the output output encoding whether the vehicle is permitted to be at the determined location on the basis of a comparison as to whether the location encoding is contained in a schedule of the vehicle, wherein the output output encoding is combined with the certificate of the certification authority (33) or with the reference thereto, wherein the outputting of the output encoding is executed by means of an optical, acoustic or electromagnetic output device.

2. The method according to the preceding claim, wherein the location information is formed on the basis of a measured location and an assignment of the measured location to a spatial grid.

3. The method according to any one of the preceding claims, wherein a time encoding representing a time information is provided, wherein the authentication encoding is formed by combining the identification encoding, the location encoding and the time encoding.

4. The method according to any one of claims 1 to 3, when dependent on claim 3, wherein the time information is formed by the satellite signals and/or other signal radiating sources, or wherein the time information is formed by an internal clock in the vehicle.

5. A computer-implemented method for authenticating a vehicle by means of a stationary device, wherein a method for dynamically marking the vehicle according to any one of the preceding claims is carried out in the vehicle, wherein the method for authenticating the vehicle by means of the stationary device comprises:
- capturing the output output encoding of the vehicle by means of a sensor which responds to the optical, acoustic or electromagnetic signals of the vehicle and which forwards the captured signal in electronic form to a computer provided for that purpose and having a processor, memory, sensor connection, output connection and connecting bus;
- extracting the identification encoding;
- extracting the location encoding;
- extracting the certificate;
- on the basis of the identification encoding, determining a schedule of the vehicle from a database (115) which contains schedules of vehicles provided with an identification identifier, in order to determine whether the vehicle is permitted to be at the determined location on the basis of a comparison as to whether the location encoding is contained in the schedule of the vehicle;
- comparing whether the location encoding is contained in the schedule;
- immediately after the comparing, additionally carrying out an authenticity check and validity check of the certificate in order to ensure that the vehicle is the one it purports to be by outputting the output encoding; and
- outputting a warning if the location encoding is not contained in the schedule.

6. The method according to the preceding claim, wherein the captured authentication encoding is formed by combining the identification encoding, the location encoding and a time encoding, wherein the method for authenticating the vehicle by means of the stationary device further comprises:
- extracting the time encoding,
- additionally comparing whether the combination of location encoding and time encoding is contained in the schedule.

7. The method according to any one of preceding claims 5 to 6, wherein, for the authenticity check, a request is made to the issuing certification authority (33) and the result is evaluated.

8. A computer program product comprising a computer-readable storage medium having computer-executable code comprised thereon, wherein the code is configured, when executed on a computer, to carry out the method according to any one of the preceding claims.

9. A vehicle component (3) of a vehicle, which is provided with a data processing device, wherein the data processing device has a processor (7) connected to a bus (19), the processor being capable of executing commands of a computer program that is stored in a program memory (17) connected to the bus (19), wherein the commands of the computer program are provided as executable code containing instructions for carrying out a method according to any one of claims 1 to 4, whereby the vehicle component (3) is configured to carry out a method according to any one of claims 1 to 4.

10. A vehicle having a vehicle component (3) according to claim 9, wherein the vehicle further comprises an optical, acoustic or electromagnetic output device for outputting the output encoding.

11. A stationary device comprising a sensor which responds to the optical, acoustic or electromagnetic signals of the vehicle and which forwards the captured signal in electronic form to a computer of the device provided for that purpose and having a processor, memory, sensor connection, output connection and connecting bus, wherein the device is configured to carry out a method according to any one of claims 5 to 7.

## Revendications

1. Procédé mis en œuvre par ordinateur pour le marquage dynamique d'un véhicule par un composant (3) du véhicule, muni d'un dispositif de traitement de données, le dispositif de traitement de données comportant un processeur (7) relié à un bus (19), capable d'exécuter des commandes d'un programme informatique stocké dans une mémoire de programme (17) reliée au bus (19), les commandes du programme informatique étant un code exécutable contenant des instructions pour l'exécution du procédé, comprenant :
- la fourniture d'un codage d'identification contenant une information identifiant le véhicule ;
- la détermination d'une information de localisation désignant une localisation du véhicule, la localisation mesurée étant déterminée par une ou plusieurs mesures basées sur un ou plusieurs signaux satellites, par une mesure de distance et/ou une triangulation avec des sources de rayonnement de signaux connues, ou par une combinaison de celles-ci ;
- la fourniture d'un codage de localisation pouvant être traité électroniquement contenant l'information de localisation ;
- la combinaison du codage d'identification et du codage de localisation afin de fournir un codage d'authentification, la combinaison des codages étant réalisée par un enchaînement, une concaténation ou une autre forme d'agrégation ;
- la signature électronique du codage d'authentification afin de fournir un codage de signature, la signature étant effectuée au moyen d'une cryptographie asymétrique, au moyen d'une clé privée du véhicule, la signature comprenant le calcul d'une valeur de hachage du codage à signer et le chiffrement de cette valeur de hachage avec la clé privée du véhicule ;
- la combinaison du codage d'authentification avec le codage de signature afin de fournir un codage de sortie, la combinaison du codage d'authentification avec le codage de signature étant réalisée par un enchaînement, une concaténation ou une autre forme d'agrégation, le codage de sortie étant en outre combiné, avant sa sortie, avec un certificat d'une autorité de certification (33) ou avec une référence à celui-ci, ledit certificat comprenant au moins la combinaison, signée par l'autorité de certification (33), du codage d'identification et d'une clé publique du véhicule ; et
- l'émission du codage de sortie, afin qu'un récepteur puisse déterminer, à partir de ce codage de sortie émité, si le véhicule est autorisé à se trouver à la localisation déterminée, au moyen d'une comparaison visant à déterminer si le codage de localisation figure dans un horaire du véhicule, le codage de sortie émis étant combiné avec le certificat de l'autorité de certification (33) ou avec une référence à celui-ci, l'émission du codage de sortie s'effectuant au moyen d'un dispositif de sortie optique, acoustique ou électromagnétique.

2. Procédé selon la revendication précédente, dans lequel l'information de localisation est formée sur la base d'une localisation mesurée et d'une affectation de cette localisation mesurée à une grille spatiale.

3. Procédé selon l'une quelconque des revendications précédentes, dans lequel un codage temporel représentant une information temporelle est fourni, le codage d'authentification étant formé en combinant le codage d'identification, le codage de localisation et le codage temporel.

4. Procédé selon l'une quelconque des revendications 1 à 3, lorsqu'elle dépend de la revendication 3, dans lequel l'information temporelle est formée par les signaux satellites et/ou d'autres sources de rayonnement de signaux, ou dans lequel l'information temporelle est formée par une horloge interne au véhicule.

5. Procédé mis en œuvre par ordinateur pour l'authentification d'un véhicule par un dispositif fixe, dans lequel un procédé pour le marquage dynamique du véhicule selon l'une des revendications précédentes est exécuté dans le véhicule, le procédé d'authentification du véhicule par le dispositif fixe comprenant :
- la détection du codage de sortie émis par le véhicule à l'aide d'un capteur sensible aux signaux optiques, acoustiques ou électromagnétiques du véhicule, lequel transmet le signal détecté sous forme électronique à un ordinateur prévu à cet effet, doté d'un processeur, d'une mémoire, d'un port de capteur, d'un port de sortie et d'un bus de connexion ;
- l'extraction du codage d'identification ;
- l'extraction du codage de localisation ;
- l'extraction du certificat ;
- sur la base du codage d'identification, la détermination d'un horaire du véhicule à partir d'une base de données (115) contenant des horaires des véhicules munis d'un identifiant, afin de déterminer si le véhicule est autorisé à se trouver à la localisation déterminée, au moyen d'une comparaison visant à déterminer si le codage de localisation figure dans l'horaire du véhicule ;
- la comparaison si le codage de localisation figure dans l'horaire ;
- immédiatement après la comparaison, procéder en outre à un contrôle d'authenticité et de validité du certificat afin de s'assurer que le véhicule est bien celui qu'il prétend être par l'émission du codage de sortie ; et
- l'émission d'un avertissement si le codage de localisation ne figure pas dans l'horaire.

6. Procédé selon la revendication précédente, dans lequel le codage d'authentification détecté est formé en combinant le codage d'identification, le codage de localisation et un codage temporel, le procédé d'authentification du véhicule par le dispositif fixe comprenant en outre :
- l'extraction du codage temporel,
- la comparaison supplémentaire visant à determiner si la combinaison du codage de localisation et du codage temporel figure dans l'horaire.

7. Procédé selon l'une des revendications 5 à 6 précédentes, dans lequel, à des fins de contrôle d'authenticité, une requête est adressée à l'autorité de certification (33) ayant délivré le certificat et le résultat est évalué.

8. Produit de programme informatique comprenant un support de stockage lisible par ordinateur sur lequel est enregistré un code exécutable par un ordinateur, ledit code étant conçu pour, lorsqu'il est exécuté sur un ordinateur, mettre en œuvre le procédé selon l'une des revendications précédentes.

9. Composant (3) d'un véhicule, muni d'un dispositif de traitement de données, le dispositif de traitement de données comportant un processeur (7) relié à un bus (19) et capable d'exécuter des commandes d'un programme informatique stocké dans une mémoire de programme (17) reliée au bus (19), les commandes du programme informatique étant un code exécutable contenant des instructions pour l'exécution d'un procédé selon l'une des revendications 1 à 4, de sorte que le composant du véhicule (3) est configuré pour exécuter un procédé selon l'une des revendications 1 à 4.

10. Véhicule comprenant un composant de véhicule (3) selon la revendication 9, le véhicule comprenant en outre un dispositif de sortie optique, acoustique ou électromagnétique destiné à l'émission du codage de sortie.

11. Dispositif fixe comprenant un capteur sensible aux signaux optiques, acoustiques ou électromagnétiques du véhicule, lequel transmet le signal détecté sous forme électronique à un ordinateur prévu à cet effet, doté d'un processeur, d'une mémoire, d'un port de capteur, d'un port de sortie et d'un bus de connexion du dispositif, ledit dispositif étant configuré pour exécuter un procédé selon l'une des revendications 5 à 7.
